# EUROPÄISCHE PATENTSCHRIFT

(11) **EP 2 785 541 B1**
(45) Veröffentlichungstag und Bekanntmachung des Hinweises auf die Patenterteilung: **03.02.2016**
(21) Anmeldenummer: 12786951.9
(22) Anmeldetag: 08.11.2012
(51) Int. Cl.: B60G 17/0185, B60G 17/016, B60G 17/052

(54) **VERFAHREN ZUR DURCHFÜHRUNG EINER PLAUSIBILITÄTSKONTROLLE ZUR ERKENNUNG EINES TRAGKRAFTVERLUSTS IN EINEM FEDERSYSTEM EINES FAHRZEUGS**
METHOD FOR CARRYING OUT A PLAUSIBILITY CHECK FOR RECOGNIZING A LOSS IN LOAD-BEARING CAPACITY IN A SUSPENSION SYSTEM OF A MOTOR VEHICLE
PROCÉDÉ PERMETTANT D'EFFECTUER UN CONTRÔLE DE PLAUSIBILITÉ POUR IDENTIFIER UNE PERTE DE FORCE PORTANTE DANS LE SYSTÈME DE SUSPENSION D'UN VÉHICULE

(30) Priorität: 01.12.2011 DE 102011087550
(43) Veröffentlichungstag der Anmeldung: 08.10.2014
(73) Patentinhaber: Continental Teves AG&Co. Ohg, 60488 Frankfurt (DE)
(72) Erfinder: HOINKHAUS, Hermann, 30938 Burgwedel (DE)
(86) Internationale Anmeldenummer: PCT/EP2012/072097
(87) Internationale Veröffentlichungsnummer: WO 2013/079292

(56) Entgegenhaltungen:
- EP-A1- 0 114 757
- EP-A2- 1 190 926
- EP-A2- 1 342 596
- WO-A1-2011/143377
- US-A- 4 483 546
- US-A- 4 700 303

## Beschreibung

Die Erfindung betrifft ein Verfahren zur Durchführung einer Plausibilitätskontrolle zur Erkennung eines Tragkraftverlusts in einem Federsystem eines Fahrzeugs.

Aus Sicherheitsrelevanten Gründen ist es bei einem Federystems eines Fahrzeuges wichtig einen möglichen Tragkraftverlust frühzeitig zu erkennen.

So ist aus der EP 1 342 596 A2 ein Verfahren einer Niveauregeleinrichtung bekannt, bei dem einzelne Federwege der Luftfederbeine über Höhensensoren gemessen werden, sowie auch über einen Drucksensor entsprechende Signale zwecks Steuerung der Luftfederventile über ein elektronisches Steuergerätes verarbeitet werden. Dabei werden die gemessenen Signale mit vordefinierten Schwellwerten verglichen um einen Regelungsbedarf zu bestimmen.

Weiterhin beschreibt die EP 1 190 926 A2 ein Luftfederregelsystem, bei dem als Messgrößen die Höhen und Drücke der Luftfedern dienen. Dabei werden die Höhenmesswerte zu einem Wank- und/oder Nick- und/oder Torsions- und/oder Hubanteil transformiert und aus den Druckmesswerten werden vertikale Kräfte berechnet. Dabei findet in einem elektronischen Steuergerät ein Vergleich mit einem bestimmt Sollwert statt um entsprechend Regelventile anzusprechen und ein Ein- bzw. Ausströmen in den Luftfedern zuzulassen.

Der Erfindung liegt die Aufgabe zugrunde, ein Verfahren zur Erkennung eines Tragkraftverlusts in einem Federsystem eines Fahrzeugs, eine Vorrichtung zur Erkennung eines Tragkraftverlusts in einem Federsystem eines Fahrzeugs sowie ein Computerprogrammprodukt zu schaffen.

Die der Erfindung zugrunde liegenden Aufgaben werden jeweils mit den Merkmalen des unabhängigen Patentanspruchs gelöst. Bevorzugte Ausführungsformen der Erfindung sind in den abhängigen Patentansprüchen angegeben.

Es wird ein Verfahren zur Durchführung einer Plausibilitätskontrolle zur Erkennung eines Tragkraftverlusts in mindestens einem Federbein eines Federsystems eines Fahrwerks während seines Betriebs, wobei Soll-Ist-Vergleiche zwischen gemessenen Federwegen und von aus den Federwegen berechneten Beurteilungsgrößen mit vordefinierten kritischen Schwellwerten vorgenommen werden, wobei die von den Federwegen berechneten Beurteilungsgrößen umfassen:
- eine Summe der Federwege,
- einen Mittelwert der Federwege,
- einen Wankwinkel einer Vorderachse des Fahrwerks,
- einen Wankwinkel einer Hinterachse des Fahrwerks,
- einen Mittelwert dieser Wankwinkel,
- einen Nickwinkel auf der rechten Seite des Fahrwerks,
- einen Nickwinkel auf der linken Seite des Fahrwerks,
- einen Mittelwert dieser Nickwinkel,
- einen Drehwinkel des Fahrzeugswerks um eine von einem linken Vorderrad und einem rechten Hinterrad des Fahrwerks gebildete Diagonalachse,
- einen Drehwinkel des Fahrzeugswerks um eine von einem rechten Vorderrad und einem linken Hinterrad des Fahrwerks gebildete Diagonalachse, oder
- einen Mittelwert der Drehwinkel um die Diagonalachsen,
und wobei im Falle, dass die vordefinierten kritischen Schwellwerte über- oder unterschritten werden, ein Erkennungssignal für ein mögliches Vorliegen des Tragkraftverlusts gesetzt wird.

Ausführungsformen der Erfindung können den Vorteil haben, dass eine Messung der Tragkraft des Federsystems eines Fahrzeugs erst dann durchzuführen ist, wenn eine Plausibilitätskontrolle, die auf Beobachtungen von Fahrzeugzuständen basiert, einen Indiz dafür liefert, dass ein Verlust einer Tragkraft des Federsystems vorliegen könnte. Liefert die Plausibilitätskontrolle dagegen ein quantitatives Ergebnis, bei denen unter keinen Umständen ein Verlust der Tragkraft des Federsystems vorliegen könnte, bräuchte eine Initiierung einer Messung der Tragkraft gar nicht erst vorgenommen werden.

Die Ausführungsform der Erfindung liefert damit in vorteilhafter Weise eine von der Meßmethode der Tragfähigkeitsmessung unabhängige Methode, einen Tragkraftverlust des Federsystems eines Fahrzeugs anzuzeigen, ohne zusätzliche Messinstrumente einzusetzen. Sollten die Sensoren für eine Messung des Tragkraftverlusts ausfallen, so liefert die Erfindung eine weitere unabhängige Methode einen sicherheitsgefährdenden Tragkraftverlust zu detektieren. Die Fahrsicherheit wird dadurch erhöht. Da somit eine höhere Sicherheit für den Fahrer während der Fahrt gewährleistet wird, wäre beispielsweise in Falle eines Luftfedersystems ein Restdruckhalteventil nicht mehr notwendig.

Der Zweck derartiger Restdruckhalteventile besteht darin, dass ein druckloses Abrollen der Luftfeder stets ausgeschlossen ist. Insbesondere soll bei längerem Stillstand vermieden werden, dass die vormontierte Luftfeder drucklos auf dem Abrollkolben abrollt.

Nach einer Ausführungsform der Erfindung sind die Federwege, die zur Berechnung der berechneten Beurteilungsgrößen verwendet werden, bandpassgefiltert und offsetfrei. Dabei bedeutet Offsetfreiheit in diesem Kontext Phasengleichheit der gemessenen Höhensignale zur Ermittlung der Federwege aus verschiedenen Federbeinen bezüglich der Zeit.

Das kann den Vorteil haben, dass die tatsächlichen Federwege der Federbeine gemessen werden, da störende Einflüsse bei der Messung eliminiert werden. Eine geeignete Bandpass-Filterung eines empfangenen Signals zur Federwegmessung kann störendes Rauschen unterdrücken. Eine verzerrungsfreie Messung eines einzelnen Federwegs wäre damit möglich.

Eine Offsetfreiheit gewährleistet, dass die Messwerte für die Federwege von verschiedenen Federbeinen in einen zeitlich korrekten Zusammenhang gebracht werden. Die zeitliche Verschiebung der an verschiedenen Federbeinen gemessenen Federwege betrüge somit Null. Somit wäre eine Voraussetzung erfüllt, damit die Werte für die gemessenen Federwege miteinander in eine Beziehung gebracht oder mittels einer mathematischen Operation miteinander verknüpft werden könnten, um weitere Beurteilungsgrößen zur Evaluierung zu generieren.

Nach einer Ausführungsform der Erfindung erfolgt eine Identifizierung eines Tragkraftverlusts in einem Federbein eines Rads des Fahrwerks und/oder in dem Federsystem einer Achse des Fahrwerks.

Das kann den Vorteil haben, dass sowohl eine Identifizierung eines möglichen Tragkraftverlusts sowohl an einem einzigen Rad des Fahrzeugs als auch achsenweise möglich ist. Dadurch können gezielt geeignete weitere Messungen und/oder Gegenmaßnahmen bei Vorliegen eines Tragkraftverlusts eingeleitet werden. Der Fahrer könnte ebenfalls Information zur Lokalisation eines möglicherweise vorliegenden Tragkraftverlusts erhalten und dementsprechend Gegenmaßnahmen einleiten.

Nach einer Ausführungsform der Erfindung werden die Soll-Ist-Vergleiche der jeweils gemessenen Federwege und der daraus berechneten Beurteilungsgrößen mit den jeweils definierten Schwellwerten in definierbaren Zeitabständen wiederholt.

Eine wiederholte Durchführung einer Plausibilitätskontrolle unter Vergleich der gemessenen Werte der Federwege mit definierten kritischen Schwellwerten in einem definierbaren Zeitabstand erhöht die Fahrsicherheit. Denn ein Abweichen der gemessenen Werte von den Soll-Werten kann zeitnah ermittelt werden. Eine Triggerung zur eigentlichen Messung des Tragkraftverlusts könnte im Bedarfsfall zeitnah initiiert werden. Geeignete Gegenmaßnahmen könnten zeitnah eingeleitet werden.

Nach einer Ausführungsform der Erfindung wird das Erkennungssignal für den Tragkraftverlust erst nach wiederholter Verifizierung gesetzt.

Das kann den Vorteil haben, dass nicht sofort bei jedem einmaligen ersten Überschreiten eines Sollwerts eine Warnung gegeben wird, sondern erst nach einem wiederholten Prozess einer Verifikation, dass tatsächlich eine Überschreitung eines Sollwerts vorliegt, die durch einen Tragkraftverlust ausgelöst wurde. Fehlarme werden dadurch reduziert.

Nach einer Ausführungsform der Erfindung wird das Erkennungssignal für den Tragkraftverlust in einem Steuergerät eines Fahrwerks gesetzt.

Das kann den Vorteil haben, dass das im Steuergerät gesetzte Erkennungssignal für weitere Steuerungen verwendet werden könnte. So könnte nicht nur eine Messung der Tragkraftverlust an einem bestimmten Federbein des Federsystems getriggert werden, sondern durchaus auch regulative lokale Gegenmaßnahmen automatisch eingeleitet werden, da der zentralen Steuereinheit alle Fahrzeuginformationen und Steuerungsmöglichkeiten jederzeit zugriffsbereit vorlägen und verwendet werden könnten.

Nach einer Ausführungsform der Erfindung wird im Falle, dass die Soll-Ist-Vergleiche einen Tragkraftverlust indizieren, ein Triggersignal zur eigentlichen Messung der Tragkraft in dem mindestens einem identifizierten Federbein des Federsystems des Fahrwerks gesetzt.

Das kann den Vorteil haben, dass die Hinweise, die von der Plausibilitätskontrolle über Beobachtung von Fahrzeugzuständen geliefert werden, durch eine direkte Messung des Tragkraftverlusts mit dafür geeigneten Messinstrumenten verifiziert und/oder falsifiziert werden könnten. Eine Verifizierung eines Tragkraftverlusts im Federbeinsystem erweist sich besonders vor der Einleitung von regulativen Gegenmaßnahmen als sinnvoll. Dadurch wird verhindert, dass eventuell falsche Gegenmaßnahmen eingeleitet werden könnten.

In einem weiteren Aspekt betrifft die Erfindung ein Computerprogrammprodukt mit von einem Prozessor ausführbaren Instruktionen zur Durchführung des obig beschriebenen Verfahrens.

In einem weiteren Aspekt betrifft die Erfindung eine Kontrollvorrichtung zur Durchführung einer Plausibilitätskontrolle zur Erkennung eines Tragkraftverlusts in mindestens einem Federbein eines Federsystems eines Fahrwerks während seines Betriebs, welche dazu ausgebildet ist, Soll-Ist-Vergleiche zwischen gemessenen Federwegen und von aus den Federwegen berechneten Beurteilungsgrößen mit vordefinierten kritischen Schwellwerten vorgenommen werden, wobei die von den Federwegen berechneten Beurteilungsgrößen umfassen:
- eine Summe der Federwege,
- einen Mittelwert der Federwege,
- einen Wankwinkel einer Vorderachse des Fahrwerks,
- einen Wankwinkel einer Hinterachse des Fahrwerks,
- einen Mittelwert dieser Wankwinkel,
- einen Nickwinkel auf der rechten Seite des Fahrwerks,
- einen Nickwinkel auf der linken Seite des Fahrwerks,
- einen Mittelwert dieser Nickwinkel,
- einen Drehwinkel des Fahrzeugswerks um eine von einem linken Vorderrad und einem rechten Hinterrad des Fahrwerks gebildete Diagonalachse,
- einen Drehwinkel des Fahrzeugswerks um eine von einem rechten Vorderrad und einem linken Hinterrad des Fahrwerks gebildete Diagonalachse, oder
- einen Mittelwert der Drehwinkel um die Diagonalachsen,
und wobei im Falle, dass die vordefinierten kritischen Schwellwerte über- oder unterschritten werden, ein Erkennungssignal für ein mögliches Vorliegen des Tragkraftverlusts gesetzt wird.

Im Folgenden werden bevorzugte Ausführungsformen der Erfindung anhand der folgenden Zeichnungen näher erläutert.

Es zeigen:
- Figur 1: ein Flussdiagramm mit Verfahrensschritten zur Ableitung von Beurteilungsgrößen aus gemessenen Federwegen,
- Figur 2: ein Flussdiagramm mit Verfahrensschritten zur Erzeugung eines Erkennungssignals für ein mögliches Vorliegen eines Tragkraftverlustes für ein Federbein an einer Fahrzeugecke,
- Figur 3: ein Flussdiagramm mit Verfahrensschritten zur Erzeugung eines Erkennungssignals für ein mögliches Vorliegen eines Tragkraftverlustes an einer Achse eines Fahrzeugs,
- Figur 4: Kontrollvorrichtung und Mittel zur Messung von Federwegen in Federbeinen.

Jeder Tragkraftverlust in Federbeinen eines Federsystems eines Fahrwerks führt zu charakteristischen Signalverläufen bezüglich der Federwege, Wank- und Nickwinkel und/oder deren Summenwerte. Dabei ist unter Tragkraft in diesem Kontext z.B. ein Druckluftverlust bei einem Luftfedersystem oder eine Funktionsstörung eines Stahlfedersystems oder eines hydropneumatischen Niveauregelsystems zu verstehen.

Beobachtungen am Fahrzeug bei Vorliegen eines Tragkraftverlusts eines Federsystems haben gezeigt, dass es z.B. bei einem Luftfedersystem, abhängig von der Art des Luftverlusts zu kleinen, großen oder extremen Abweichungen von vordefinierten Sollwerten für Federwege, Wank- und/oder Nickwinkel bzw. deren Mittelwerte und/oder Summenwerte kommt. Dementsprechend kann durch jeweilige Detektierung einer kleinen oder großen Sollabweichung ein Hinweis auf die Art eines Tragkraftverlusts gegeben werden. Daher können z.B. für kleine Sollabweichungen und für große Sollabweichungen verschiedene zulässige Intervallgrenzen vordefiniert werden, bei deren jeweiligen Überschreiten ein Rückschluss auf die Art eines Tragkraftverlusts geschlossen werden kann.

Für eine aus einer Beobachtung des Fahrzeugverhaltens basierende Plausibilitätskontrolle zur Voraberkennung, ob möglicherweise ein Tragkraftverlust an mindestens einem der Federbeine eines Federsystems eines Fahrwerks vorliegen könnte, werden in Ausführungsformen der Erfindung neben gemessenen Höhenwerten für Federwege der Federbeine weitere Beurteilungsgrößen aus den Federwegen in einer Phase einer Signalkonditionierung für ein resultierendes Erkennungssignal als Indiz für einen möglicherweise vorliegenden Tragkraftverlust berechnet.

In diesem Kontext ist unter Federweg der Weg zu verstehen, den ein Rad zwischen unbelasteter (Radlast Null) und belasteter Stellung (meist doppelte statische Radlast) zurücklegt.

Ein großer Federweg ermöglicht den Ausgleich großer Fahrbahnunebenheiten, bewirkt jedoch einen hohen Schwerpunkt des Fahrzeugs und steht daher bei zweispurigen Fahrzeugen hohen Geschwindigkeiten in Kurven entgegen. Sportwagen verfügen daher in der Regel über einen kleinen Federweg. Je kürzer der Federweg ist, desto steifer müssen die Federn sein. Dies gilt für konventionelle Stahl-Linearfedern, deren Kraft mit der Wegverkürzung zunimmt, und für Stahl-Drehstabfedern, deren Drehmoment mit dem Verdrehwinkel ansteigt, es gilt jedoch nicht in jedem Fall für Luft-, Gas-, Hydraulik- oder Kombinationssysteme. Der Federweg kann durch Federwegbegrenzer reduziert werden.

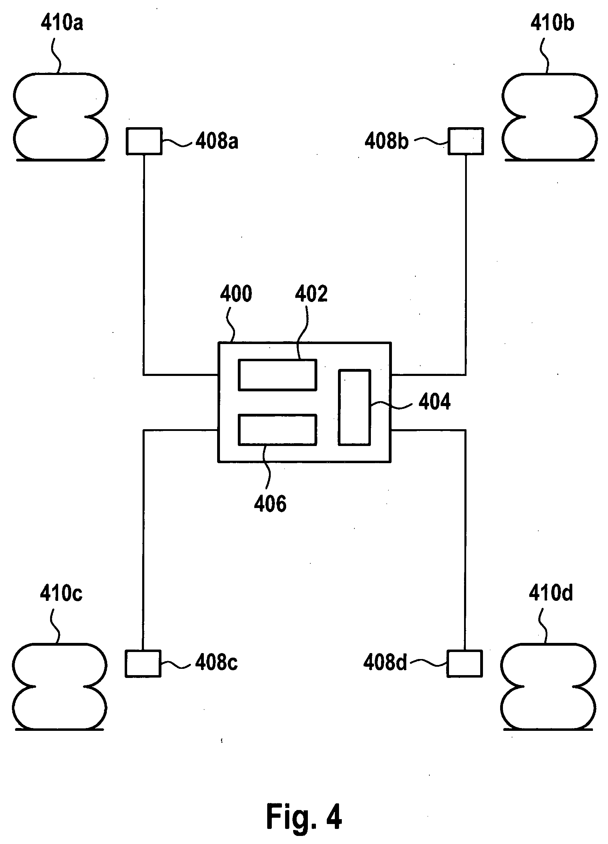

Die Figur 4 zeigt eine Kontrollvorrichtung 400 eines Fahrzeugs mit einem Prozessor 402, einem Speicher 404 und einem Modul 406, welche Informationen über die Federwege der Federbeine 410a, 410b, 410c, 410d über Mittel zur Messung von Federwegen 408a, 408b, 408c, 408d empfängt. Im Modul 406 beispielsweise könnten die Verfahrensschritte des beschriebenen Verfahrens ablaufen.

Ausführungsformen der Erfindung könnten bei Fahrzeugen mit einem Stahlfederfahrwerk ohne Niveauanpassung anwendbar sein. Hier könnte eine mögliche unsymmetrische Beladung des Fahrzeugs, die bei der Fahrt zu einer schlechten Beherrschbarkeit des Fahrzeugs und/oder zu einer Gefährdung der Fahrsicherheit führen könnte, detektiert werden. Bei einem Stahlfederfahrwerk ohne Niveauanpassung könnte z.B. ein Bruch eines Fahrwerkselements, wie z.B. einer Tragfeder erkannt werden.

Ebenso anwendbar ist die Erfindung bei einem Fahrzeug mit Stahlfederfahrwerk mit Niveauanpassung mit z.B. einer Fußpunktverschiebung und/oder einem selbstpumpenden hydropneumatischen System. Hier wäre eine Funktionsprüfung der Niveauanpassung möglich.

Zum Einsatz kommen könnte die Erfindung auch in einem Fahrzeug mit einem hydropneumatischen Fahrwerk. Hier könnte ein Funktionsverlust des Fahrwerks erkannt werden. In Abhängigkeit von der Systemausführung könnte bei positivem Plausibilitätscheck eine anschließende Messung der Tragkraft getriggert werden.

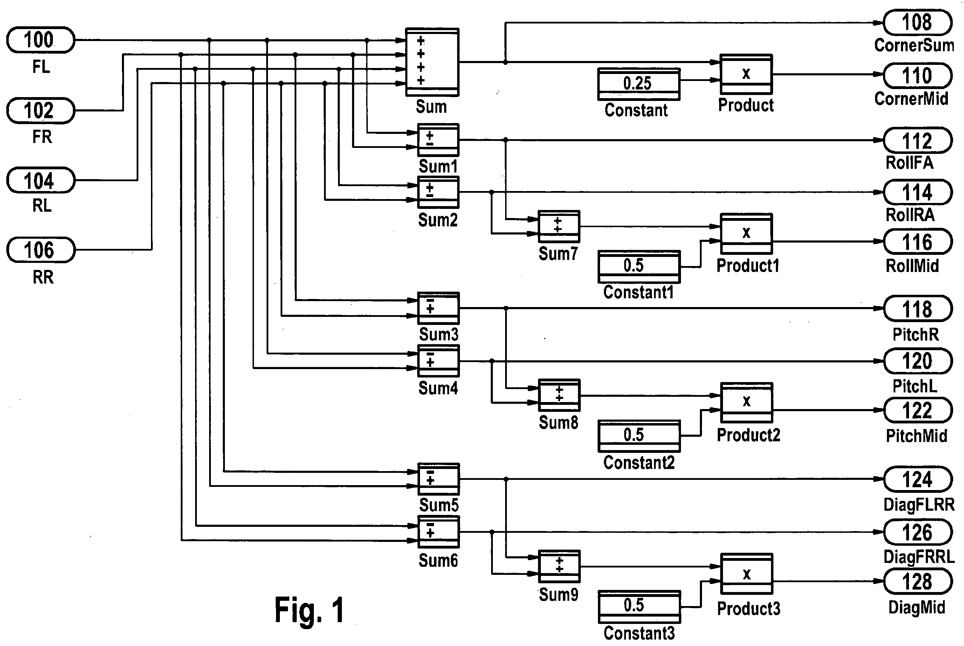

Die Figur 1 zeigt wie aus gemessenen Federwegen VL (linkes Vorderrad) 100, VR (rechtes Vorderrad) 102, HL (linkes Hinterrad) 104 und HR (rechtes Hinterrad) 106 durch mathematische Operationen (Sum, Sum1, Sum2, Sum3, Sum4, Sum5, Sum6, Sum7, Sum8, Sum9, Constant, Constant1, Constant2, Constant3, Product, Product1, Product2, Product3) weitere Beurteilungsgrößen (Summe Federwege 108, Mittelwert Federwege 110, Wankmittel VA 112, Wankwinkel HA 114, Mittelwert Wankwinkel 116, Nickwinkel Rechts 118, Nickwinkel Links 120, Mittelwert Nickwinkel 116, Diagonale VL-HR 124, Diagonale VR-HL 126, Mittelwert Diagonale 128) zur Beurteilung, ob ein Tragkraftverlust vorliegen könnte, ermittelt werden. Dabei steht VA für Vorderachse, HA für Hinterachse.

Der Wankwinkel ist eine Kenngröße für die Wankbewegung eines Fahrzeugs. Er definiert den Winkel der Drehung um die Längsachse des Fahrzeugs. Der Nickwinkel ist eine Kenngröße für die Nickbewegung eines Fahrzeugs. Die Nickbewegung eines Fahrzeugs entspricht der Längsneigung eines Fahrzeugs, d.h. der Bewegung um seine Querachse (Nase nach oben oder unten). Der Nickwinkel beschreibt den Winkel der Fahrzeugnase über bzw. unter dem Horizont.

Die Messung der Federwege 100, 102, 104, 106 der Federbeine eines Federsystems eines Fahrzeugs erfolgt zunächst durch Empfang eines Höhensignals durch Höhensensoren im Federsystem des Fahrwerks. Um nur phasengleiche Federwege in Beziehung zu bringen, erfolgt eine Offsetberücksichtigung der empfangenen Signale. Um störendes Rauschen durch anderweitig erzeugte Signale zu unterdrücken, erfolgt gleichfalls eine Bandpass-Filterung der empfangenen Höhensignale. Erst danach erfolgt eine Signalkonditionierung, wie in Figur 1 dargestellt, bei welcher bandpassgefilterte offsetfreie Federwege VL 100, VR 102, HL 104, HR 106 als Eingangsgrößen zur Berechnung weiterer Beurteilungsgrößen 108, 110, 112, 114, 116, 118, 120, 122, 124, 126, 128 als Ausgangsgrößen verwendet werden.

In Figur 1 berechnet sich beispielsweise die Summe der Federwege CornerSum 108 durch einfaches Addieren der bandpassgefilterten offsetfreien Federwege mittels der mathematischen Operation Sum. Der Mittelwert der Federwege CornerMid 110 berechnet sich durch Hintereinanderschalten der mathematischen Summierungsoperation Sum und einer Multiplikationsoperation Product mit der Konstanten Constant 0.25. Der Wankwinkel der Vorderachse RollFA 112 berechnet sich aus Summation Sum1 der Federwege FL 100 und FR 102. Der Wankwinkel der Hinterachse RollRA 114 berechnet sich aus Summation Sum2 der Federwege RL 104 und RR 106. Der Mittelwert der Wankwinkel RollMid 116 berechnet sich aus einer Summation Sum7 der berechneten Wankwinkel RollFA 112 und RollRA 114 und einer Multiplikation Product 1 mit einer Konstanten Constant1 mit Wert 0.5. Der Nickwinkel Rechts PitchR 118 berechnet sich aus Summation Sum3 der Federwege FR 102 und RR 106. Der Nickwinkel Links PitchL 120 berechnet sich aus Summation Sum4 der Federwege FL 100 und RL 104. Der Mittelwert der Nickwinkel PitchMid 122 berechnet sich aus Summation Sum8 des Nickwinkels Rechts PitchR und des Nickwinkels Links PitchL 120 und anschließende Multiplikation Product2 mit der Konstanten Constant2 im Wert von 0.5. Eine Torsion um die Diagonalachse linkes Vorderrad/rechtes Hinterrad DiagFLRR 124 berechnet sich aus einer Summation Sum5 der Federwege FL 100 und RR 106. Eine Torsion um die Diagonalachse rechtes Vorderrad/linkes Hinterrad DiagFLRL 126 berechnet sich aus einer Summation Sum6 der Federwege FR 102 und RL 106. Ein Mittelwert DiagMid 128 der Torsionen um die beiden Diagonalachsen errechnet sich aus einer Summation Sum9 und anschließender Multiplikation Product3 mit der Konstante Constant3 mit Wert 0.5. Die genannten Berechnungsmodi sind nur Beispiele für mögliche Ausführungsformen der Erfindung.

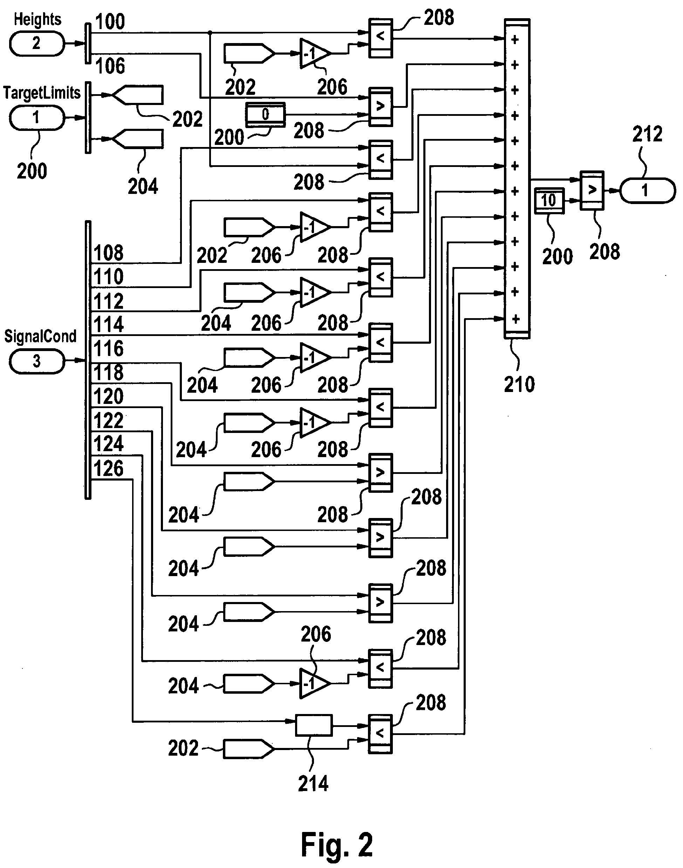

Die Figur 2 zeigt, wie gemessene Federwege Heights sowie weitere aus diesen berechneten Beurteilungsgrößen SignalCond 108, 110, 112, 114, 116, 118, 120, 122, 124, 126, 128 jeweils einem Soll-Ist-Vergleich mit jeweils vordefinierten Schwellwerten TargetLimits 200, wie z.B. einem vordefinierten Sollniveau TargetLevel 200 inklusive Berücksichtigung einer kleinen Abweichung Limit_Near 202 und/oder großen Abweichung Limit_Wide 204 systematisch einzeln unterzogen werden. Die jeweiligen Abweichungen der gemessenen und berechneten Fahrzeuggrößen werden mittels einer Verhältniszahl RelationalOperatorX 208 (X steht für eine Indexzahl) quantifiziert. Diese Verhältniszahlen RelationalOperatorX 208 werden in der Operation Sum11 210 summiert. Die Summe dieser Verhältniszahlen RelationalOperatorX 208 wird mit einer vordefinierten Gesamt-Verhältniszahl, hier RelationalOperator12 208, welche eine Konstante C, darstellt verglichen. Je nachdem in welchem Verhältnis die Summe der Verhältniszahlen RelationalOperatorX 208 zur vordefinierten Gesamt-Verhältniszahl C steht, und welcher Sollwert einzuhalten ist, erfolgt ein Absetzen eines Erkennungssignals 212. Dabei basiert der Wert für die Gesamt-Verhältniszahl auf einer mehrstufigen mathematischen Verknüpfung bzw. Aggregation von empirisch beobachteten geeigneten Fahrzeuggrößen, deren Werte bei hoher Validität und hoher Reliabilität mit einem Tragkraftverlust in einem Federbein an einem Fahrzeugrad korrelieren.

In Fig. 2 erfolgt das Absetzen eines Erkennungssignals 212, welches beispielsweise auf einen potentiellen Tragkraftverlust am linken Vorderrad hinweist. Das Verfahren ermöglicht somit die Detektierung eines möglichen Tragkraftverlusts an einem einzigen bestimmten Rad des Fahrzeugs. Ein nach Durchlaufen aller Verfahrensschritte abgesetztes Erkennungssignal 212 übermittelt Informationen darüber, an welchem Fahrzeugrad genau ein Tragkraftverlust vorliegt.

Für den Fall, dass ein möglicher Tragkraftverlust für ausschließlich ein einzelnes Rad indiziert werden soll, erfolgt das Absetzen eines Erkennungssignals 212, erst dann, wenn eine vordefinierte Anzahl von Soll-Ist-Abweichungen bei den Beurteilungsgrößen 108, 110, 112, 114, 116, 118, 120, 122, 124, 126, 128 vorliegt. Bei der in Fig. 2 dargestellten Ausführungsform müssten beispielsweise 11 von 13 Beurteilungsgrößen Abweichungen ihrer Ist-Werte von den Sollwerten 200 aufweisen, damit ein Erkennungssignal 212 gesetzt würde. Als valide und reliable Soll-Ist Abweichungen der Beurteilungsgrößen 108, 110, 112, 114, 116, 118, 120, 122, 124, 126, 128 zur Erkennung eines möglichen Tragkraftverlusts an nur einem Rad umfassen die beschriebenen Verfahrensschritte beispielsweise:
Federweg am linken Vorderrad (corner FL) < - große Abweichung (- limit_wide);
Federweg am rechten Hinterrad (corner RR) (diagonal gegenüberliegen) < 0;
Summe aller Federwege (corner sum)(all corners) < - kleine Abweichung (- limit_near);
Wankwinkel Vorderachse (roll value FA) < - große Abweichung ( - limit_wide);
Wankwinkel Hinterachse (roll value RA) < - große Abweichung ( - limit_wide);
Mittelwert der Wankwinkel (roll value mean value) < - große Abweichung ( - limit_wide);
Nickwinkel rechts (pitch value R) < + große Abweichung (+ limit_wide);
Nickwinkel links (pitch value L) < + große Abweichung (+ limit_wide);
Mittelwert der Nickwinkel (pitch value mean value) < große Abweichung (limit_wide);
Torsion um die Diagonalachse linkes Vorderrad/rechtes Hinterrad (diagonal value FLRR) < - große Abweichung ( - limit_wide);
Torsion um die Diagonalachse rechtes Vorderrad/linkes Hinterrad (diagonal value FRRL) < kleine Abweichung (limit_near).

Die soeben aufgeführten Soll-Ist-Abweichungen sind nur exemplarisch für Ausführungsformen der Erfindung.

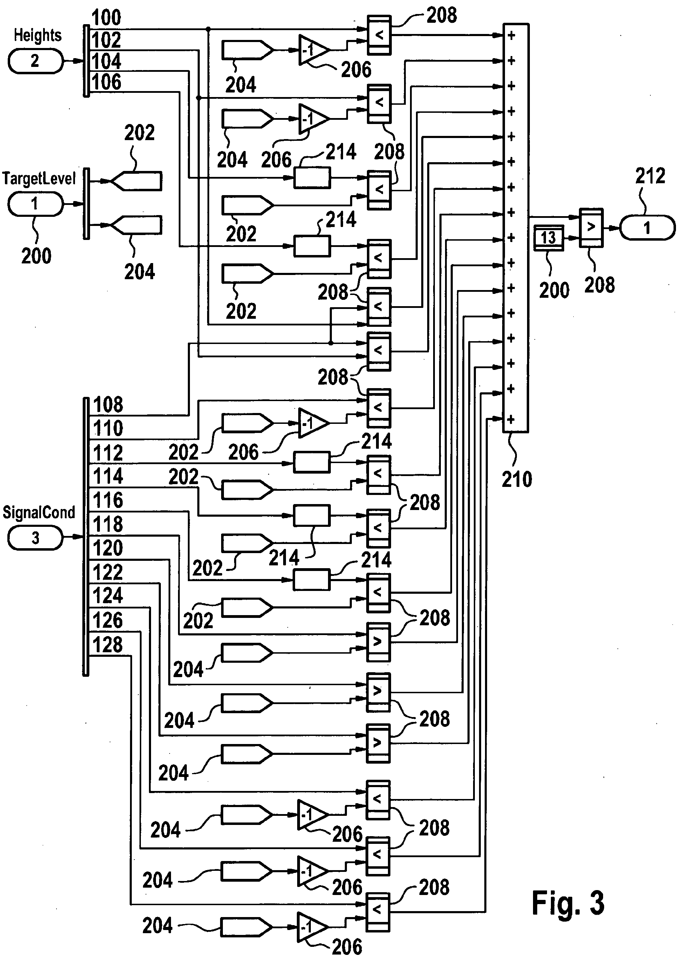

In Fig. 3 ist exemplarisch dargestellt, wie ein Erkennen eines potentiellen Vorliegens eines Tragkraftverlusts an einer Fahrzeugachse möglich ist. Auch hier werden gemessene Federwege Heights sowie weitere aus diesen abgeleitete Beurteilungsgrößen SignalCond 108, 110, 112, 114, 116, 118, 120, 122, 124, 126, 128 jeweils einem Soll-Ist-Vergleich mit jeweils vordefinierten Schwellwerten TargetLimits 200, wie z.B. einem vordefinierten Sollniveau TargetLevel 200 inklusive Berücksichtigung einer kleinen Abweichung Limit_Near 202 und/oder großen Abweichung Limit_Wide 204 systematisch einzeln unterzogen.

Die jeweiligen Abweichungen der gemessenen und berechneten Fahrzeuggrößen werden ebenfalls mittels einer Verhältniszahl RelationalOperatorX 208 (X steht für eine Indexzahl) quantifiziert. Diese Verhältniszahlen RelationalOperatorX werden wiederum in der Operation Sum11 210 summiert. Die Summe dieser Verhältniszahlen RelationalOperatorX 208 wird analog mit einer vordefinierten Gesamt-Verhältniszahl 208, hier RelationalOperator12, welche eine Konstante C, darstellt verglichen. Je nachdem in welchem Verhältnis die Summe der Verhältniszahlen RelationalOperatorX zur vordefinierten Gesamt-Verhältniszahl C steht, und welcher Sollwert einzuhalten ist, erfolgt wiederum ein Absetzen eines Erkennungssignals. Dabei basiert der Wert für die Gesamt-Verhältniszahl auf einer mehrstufigen mathematischen Verknüpfung bzw. Aggregation von empirisch beobachteten geeigneten Fahrzeuggrößen, deren Werte bei hoher Validität und hoher Reliabilität mit einem Tragkraftverlust in einem Federbein an einer Fahrzeugachse korrelieren.

In Fig. 3 erfolgt das Absetzen eines Erkennungssignals 212, welches auf einen potentiellen Tragkraftverlust an der Vorderachse des Fahrwerks hinweist. Das Verfahren ermöglicht somit die Detektierung eines möglichen Tragkraftverlusts an einer Achse eines Fahrzeugs. Ein nach Durchlaufen aller Verfahrensschritte abgesetztes Erkennungssignal übermittelt Informationen darüber, an welcher Fahrzeugachse genau ein Tragkraftverlust vorliegt.

Für den Fall, dass ein möglicher Tragkraftverlust für ausschließlich eine Fahrzeugachse indiziert werden soll, erfolgt das Absetzen eines Erkennungssignals 212, erst dann, wenn eine vordefinierte Anzahl von Soll-Ist-Abweichungen bei den Beurteilungsgrößen 108, 110, 112, 114, 116, 118, 120, 122, 124, 126, 128 vorliegt. Bei der in Fig. 3 dargestellten Ausführungsform müssten beispielsweise 14 von 16 Beurteilungsgrößen Abweichungen ihrer Ist-Werte von den Sollwerten 200 aufweisen, damit ein Erkennungssignal 212 gesetzt würde. Als valide und reliable Soll-Ist-Abweichungen der Beurteilungsgrößen 108, 110, 112, 114, 116, 118, 120, 122, 124, 126, 128 zur Erkennung eines möglichen Tragkraftverlusts an einer Fahrzeugachse umfassen die beschriebenen Verfahrensschritte beispielsweise:
Federweg am linken Vorderrad (corner FL) < - große Abweichung ( - limit_wide);
Federweg am rechten Vorderrad (corner FR) < - große Abweichung ( - limit_wide);
Federweg am linken Hinterrad (corner RL) < kleine Abweichung ( - limit_near);
Federweg am rechten Hinterrad (corner RR) < kleine Abweichung ( - limit_near);
Summe aller Federwege (corner sum)(all corners) < Federweg am linken Vorderrad (corner FL);
Summe aller Federwege (corner sum)(all corners) < Federweg am rechten Vorderrad (corner FR);
Mittelwert der Federwege (corner mean value) < - kleine Abweichung ( - limit_near);
Wankwinkel Vorderachse (roll value FA) < kleine Abweichung ( - limit_near);
Wankwinkel Hinterachse (roll value RA) < kleine Abweichung ( - limit_near);
Mittelwert der Wankwinkel (roll value mean value) < - kleine Abweichung ( - limit_near);
Nickwinkel rechts (pitch value R) > große Abweichung (limit_wide);
Nickwinkel links (pitch value L) > große Abweichung (limit_wide);
Mittelwert der Nickwinkel (pitch value mean value) > große Abweichung (limit_wide);
Torsion um die Diagonalachse linkes Vorderrad/rechtes Hinterrad (diagonal value FLRR) < - große Abweichung ( - limit_wide);
Torsion um die Diagonalachse rechtes Vorderrad/linkes Hinterrad (diagonal value FRRL) < - große Abweichung ( - limit_wide);
Mittelwert der Torsionen um die Diagonalachsen < - große Abweichung ( - limit_wide).

Die soeben aufgeführten Soll-Ist-Abweichungen sind wiederum nur exemplarisch für Ausführungsformen der Erfindung.

Die in den Figuren 1,2 und 3 dargestellten Verfahrensschritte werden regelmäßig wiederholt.

Ein aufgrund der Soll-Ist-Vergleiche sich ergebenes Absetzen eines Erkennungssignals 212 erfolgt nicht sofort bei erstmaligem Über- oder Unterschreiten eines kritischen Schwellenwerts 200, sondern erst nach einer Bestätigung des Erkennungssignals 212 nach einem ununterbrochenen Vorliegen für eine frei konfigurierbare Zeitdauer. So wird dynamisches Fahrverhalten berücksichtigt und Fehlalarme werden reduziert.

Nach Ausführungsformen der Erfindung ist das Erkennungssignal 212 alls ein Triggersignal zur Initiierung einer direkten Messung eines Tragkraftverlusts durch geeignete Messinstrumente ausgeprägt. Bei einem Luftfedersystem beispielsweise könnten durch das Triggersignal z.B. Drucksensoren zur direkten Messung einer Druckluft in den Federbeinen des Luftfedersystems veranlasst werden.

Die Funktionen von Ausführungsformen der Erfindung könnten in Steuereinheiten eines Fahrzeugs implementiert werden. So könnte beispielsweise der Berechnungszyklus der Verfahrensschritte in den Berechnungszyklus eines Steuergeräts integriert und mit diesen synchronisiert werden.

Ausführungsformen als Computerprogrammprodukt sind auch möglich, so dass das Verfahren unabhängig vom jeweiligen Fahrzeugtyp eingesetzt werden könnte.

### Bezugszeichenliste

- 100: Federweg am linken Vorderrad
- 102: Federweg am rechten Vorderrad
- 104: Federweg am linken Hinterrad
- 106: Federweg am rechten Hinterrad
- 108: Summe der Federwege
- 110: Mittelwert Federwege
- 112: Wankwinkel der Vorderachse
- 114: Wankwinkel der Hinterachse
- 116: Mittelwert der Wankwinkel
- 118: Nickwinkel rechts
- 120: Nickwinkel links
- 122: Mittelwert der Nickwinkel
- 124: Diagonalachse, die von linken Vorderrad und vom rechten Hinterrad gebildet wird
- 126: Diagonalachse, die von rechten Vorderrad und vom linken Hinterrad gebildet wird
- 128: Mittelwert der Diagonalen
- 200: jeweiliger Sollwert
- 202: kleine Abweichung vom jeweiligen Sollwert
- 204: große Abweichung vom jeweiligen Sollwert
- 206: Toleranzgrenze
- 208: Verhältnis aus Soll- und Ist-Wert
- 210: Aggregation
- 212: Erkennungssignal
- 214: Absolutwert der Toleranzgrenze
- 400: Kontrollvorrichtung
- 402: Prozessor
- 404: Speicher
- 406: Modul
- 408a, 408b, 408c, 408d: Mittel zur Messung von Federwegen
- 410a, 410b, 410c, 410d: Federbeine

## Patentansprüche

1. Computer-implementiertes Verfahren zur Durchführung einer Plausibilitätskontrolle zur Erkennung eines Tragkraftverlusts in mindestens einem Federbein eines Federsystems eines Fahrwerks während seines Betriebs, wobei Soll-Ist-Vergleiche zwischen gemessenen Federwegen (100, 102, 104, 106) und von aus den Federwegen (100, 102, 104, 106) berechneten Beurteilungsgrößen (108, 110, 112, 114, 116, 118, 120, 122, 124, 126, 128) mit vordefinierten kritischen Schwellwerten (200) vorgenommen werden, wobei die von den Federwegen (100, 102, 104, 106) berechneten Beurteilungsgrößen umfassen:
- eine Summe der Federwege (108),
- einen Mittelwert der Federwege (110),
- einen Wankwinkel einer Vorderachse (112) des Fahrwerks,
- einen Wankwinkel einer Hinterachse (114) des Fahrwerks,
- einen Mittelwert dieser Wankwinkel (116),
- einen Nickwinkel auf der rechten Seite (118) des Fahrwerks,
- einen Nickwinkel auf der linken Seite (120) des Fahrwerks,
- einen Mittelwert dieser Nickwinkel (122),
- einen Drehwinkel des Fahrzeugswerks um eine von einem linken Vorderrad und einem rechten Hinterrad des Fahrwerks gebildete Diagonalachse (124),
- einen Drehwinkel des Fahrzeugswerks um eine von einem rechten Vorderrad und einem linken Hinterrad des Fahrwerks gebildete Diagonalachse (126), oder
- einen Mittelwert der Drehwinkel um die Diagonalachsen (128),
und wobei im Falle, dass die vordefinierten kritischen Schwellwerte (200) über- oder unterschritten werden, ein Erkennungssignal (212) für ein mögliches Vorliegen des Tragkraftverlusts gesetzt wird.

2. Verfahren nach Anspruch 1, wobei die Federwege (100, 102, 104, 106), die zur Berechnung der Beurteilungsgrößen verwendet werden, bandpassgefiltert und offsetfrei sind.

3. Verfahren nach einem der vorhergehenden Ansprüche, wobei eine Identifizierung eines Tragkraftverlusts in einem Federbein eines Rads des Fahrwerks und/oder in dem Federsystem einer Achse des Fahrwerks erfolgt.

4. Verfahren nach einem der vorhergehenden Ansprüche, wobei die Soll-Ist-Vergleiche der jeweils gemessenen Federwege (100, 102, 104, 106) und der daraus berechneten Beurteilungsgrößen mit den jeweils definierten Schwellwerten (200) in definierbaren Zeitabständen wiederholt werden.

5. Verfahren nach einem der vorhergehenden Ansprüche, wobei das Erkennungssignal (212) für den Tragkraftverlust erst nach wiederholter Verifizierung gesetzt wird.

6. Verfahren nach einem der vorhergehenden Ansprüche, wobei das Erkennungssignal (212) für den Tragkraftverlust in einem Steuergerät eines Fahrwerks gesetzt wird.

7. Verfahren nach einem der vorhergehenden Ansprüche, wobei im Falle, dass die Soll-Ist-Vergleiche einen Tragkraftverlust indizieren, ein Triggersignal (212) zur eigentlichen Messung der Tragkraft in dem mindestens einem identifizierten Federbein des Federsystems des Fahrwerks gesetzt wird.

8. Computerprogrammprodukt mit von einem Prozessor ausführbaren Instruktionen zur Durchführung der Verfahrensschritte gemäß einem der vorigen Ansprüche.

9. Kontrollvorrichtung zur Durchführung einer Plausibilitätskontrolle zur Erkennung eines Tragkraftverlusts in mindestens einem Federbein eines Federsystems eines Fahrwerks während seines Betriebs, welche dazu ausgebildet ist, Soll-Ist-Vergleiche zwischen gemessenen Federwegen (100, 102, 104, 106) und von aus den Federwegen (100, 102, 104, 106) berechneten Beurteilungsgrößen (108, 110, 112, 114, 116, 118, 120, 122, 124, 126, 128) mit vordefinierten kritischen Schwellwerten (200) vorzunehmen, wobei die von den Federwegen berechneten Beurteilungsgrößen umfassen:
- eine Summe der Federwege (108),
- einen Mittelwert der Federwege (110),
- einen Wankwinkel einer Vorderachse (112) des Fahrwerks,
- einen Wankwinkel einer Hinterachse (114) des Fahrwerks,
- einen Mittelwert dieser Wankwinkel (116),
- einen Nickwinkel auf der rechten Seite (118) des Fahrwerks,
- einen Nickwinkel auf der linken Seite (120) des Fahrwerks,
- einen Mittelwert dieser Nickwinkel (122),
- einen Drehwinkel des Fahrzeugswerks um eine von einem linken Vorderrad und einem rechten Hinterrad des Fahrwerks gebildete Diagonalachse (124),
- einen Drehwinkel des Fahrzeugswerks um eine von einem rechten Vorderrad und einem linken Hinterrad des Fahrwerks gebildete Diagonalachse (126), oder
- einen Mittelwert der Drehwinkel um die Diagonalachsen (128),
und wobei im Falle, dass die vordefinierten kritischen Schwellwerte (200) über- oder unterschritten werden, ein Erkennungssignal (212) für ein mögliches Vorliegen des Tragkraftverlusts gesetzt wird.

## Claims

1. Computer-implemented method for performing a plausibility check for detecting a loss of load bearing capacity in at least one suspension strut of a suspension system of a chassis during its operation, wherein target-actual value comparisons are carried out between measured suspension displacements (100, 102, 104, 106) and evaluation variables (108, 110, 112, 114, 116, 118, 120, 122, 124, 126, 128) calculated from the suspension displacements (100, 102, 104, 106) with predefined critical threshold variables (200), wherein the evaluation variables calculated from the suspension displacements (100, 102, 104, 106) include:
- a sum of the suspension displacements (108),
- an average value of the suspension displacements (110),
- a roll angle of a front axle (112) of the chassis,
- a roll angle of a rear axle (114) of the chassis,
- an average value of said roll angles (116),
- a pitch angle on the right side (118) of the chassis,
- a pitch angle on the left side (120) of the chassis,
- an average value of said pitch angles (122),
- an angle of rotation of the chassis about a diagonal axis (124) formed by a left front wheel and a right rear wheel of the chassis,
- an angle of rotation of the chassis about a diagonal axis(126) formed by a right front wheel and a left rear wheel of the chassis, or
- an average value of the angle of rotation about the diagonal axes (128),
and wherein an identification signal (212) for the possible existence of a loss of load bearing capacity is set in the case in which the predefined critical threshold values (200) are exceeded or not attained.

2. Method according to Claim 1, **characterized in that** the suspension displacements (100, 102, 104, 106) that are used for calculating the evaluation variables are bandpass filtered and offset-free.

3. Method according to any one of the preceding claims, **characterized in that** the identification of a loss of load bearing capacity in a suspension strut of a wheel of the chassis and/or in the suspension system of an axle of the chassis is carried out.

4. Method according to any one of the preceding claims, **characterized in that** the target-actual value comparisons of the respective measured suspension displacements (100, 102, 104, 106) and the evaluation variables calculated therefrom with the respective defined threshold variables (200) are repeated at definable time intervals.

5. Method according to any one of the preceding claims, **characterized in that** the identification signal (212) for the loss of load bearing capacity is only set following repeated verification.

6. Method according to any one of the preceding claims, **characterized in that** the identification signal (212) for the loss of load bearing capacity is set in a controller of a chassis.

7. Method according to any one of the preceding claims, **characterized in that** in the case in which the target-actual value comparisons indicate a loss of load bearing capacity, a trigger signal (212) is set for the actual measurement of the load bearing capacity in the at least one identified suspension strut of the suspension system of the chassis.

8. Computer program product with instructions that can be implemented by a processor for performing the steps of the method according to one of the previous claims.

9. Checking device for performing a plausibility check for detecting a loss of load bearing capacity in at least one suspension strut of a suspension system of a chassis during its operation, which is designed to carry out target-actual value comparisons between measured suspension displacements (100, 102, 104, 106) and evaluation variables(108, 110, 112, 114, 116, 118, 120, 122, 124, 126, 128) calculated from the suspension displacements (100, 102, 104, 106) with predefined critical threshold variables (200), **characterized in that** the evaluation variables calculated by the suspension displacements include:
- a sum of the suspension displacements (108),
- an average value of the suspension displacements (110),
- a roll angle of a front axle (112) of the chassis,
- a roll angle of a rear axle (114) of the chassis,
- an average value of said roll angles (116),
- a pitch angle on the right side (118) of the chassis,
- a pitch angle on the left side (120) of the chassis,
- an average value of said pitch angles (122),
- an angle of rotation of the chassis about a diagonal axis (124) formed by a left front wheel and a right rear wheel of the chassis,
- an angle of rotation of the car plant about a diagonal axis (126) formed by a right front wheel and a left rear wheel of the chassis, or
- an average value of the angle of rotation about the diagonal axes (128),
and wherein an identification signal (212) for the possible existence of a loss of load bearing capacity is set in the case in which the predefined critical threshold values (200) are exceeded or not attained.

## Revendications

1. Procédé mis en oeuvre sur ordinateur pour effectuer un contrôle de plausibilité permettant d'identifier une perte de force de traction dans au moins une jambe de suspension d'un système de suspension d'un train roulant pendant son fonctionnement, dans lequel des comparaisons entre valeurs nominales et effectives sont effectuées entre des déplacements élastiques mesurés (100, 102, 104, 106) et des grandeurs de jugement (108, 110, 112, 114, 118, 120, 122, 124, 126, 128) calculées à partir des déplacements élastiques (100, 102, 104, 106) avec des valeurs de seuil critiques prédéfinies (200), dans lequel les grandeurs de jugement calculées à partir des déplacements élastiques (100, 102, 104, 106) comprennent :
- une somme des déplacements élastiques (108),
- une valeur moyenne des déplacements élastiques (110),
- un angle de roulis d'un essieu avant (112) du train de roulement,
- un angle de roulis d'un essieu arrière (114) du train de roulement,
- une valeur moyenne de ces angles de roulis (116),
- un angle de tangage du côté droit (118) du train de roulement,
- un angle de tangage du côté gauche (120) du train de roulement,
- une valeur moyenne de ces angles de tangage (122),
- un angle de rotation du train de roulement de véhicule autour d'un axe diagonal (124) formé par une roue avant gauche et une roue arrière droite du train de roulement,
- un angle de rotation du train de roulement de véhicule autour d'un axe diagonal (126) formé par une roue avant droite et une roue arrière gauche du train de roulement, ou
- une valeur moyenne des angles de rotation autour des axes diagonaux (128),
et dans lequel, dans le cas où les valeurs de seuil critiques prédéfinies (200) sont dépassées en sens croissant ou décroissant, un signal de reconnaissance (212) est validé pour l'existence possible de la perte de force de traction.

2. Procédé selon la revendication 1, dans lequel les déplacements élastiques (100, 102, 104, 106) qui sont utilisés pour calculer les grandeurs de jugement sont soumis à un filtrage passe-bande et sont exempts de décalage.

3. Procédé selon l'une quelconque des revendications précédentes, dans lequel une identification de la perte de force de traction est effectuée dans une jambe de suspension d'une roue d'un train de roulement et/ou dans le système de suspension d'un axe du train de roulement.

4. Procédé selon l'une quelconque des revendications précédentes, dans lequel les comparaisons entre valeurs nominales et effectives des déplacements élastiques (100, 102, 104, 106) respectivement mesurés et les grandeurs de jugement calculées à partir de celles-ci sont répétées avec les valeurs de seuil respectivement définies (200) à des intervalles de temps pouvant être définis.

5. Procédé selon l'une quelconque des revendications précédentes, dans lequel le signal de reconnaissance (212) n'est validé pour la perte de force de traction qu'après une vérification répétée.

6. Procédé selon l'une quelconque des revendications précédentes, dans lequel le signal de reconnaissance (212) est validé pour la perte de force de traction dans un appareil de commande d'un train de roulement.

7. Procédé selon l'une quelconque des revendications précédentes, dans lequel, dans le cas où les comparaisons entre valeurs nominales et effectives indiquent une perte de force de traction, un signal de déclenchement (212) destiné à la mesure proprement dite de la force de traction est validé dans l'au moins une jambe de suspension identifiée du système de suspension du train de roulement.

8. Produit de programme informatique comportant des instructions exécutables par un processeur et destinées à mettre en oeuvre les étapes du procédé selon l'une quelconque des revendications précédentes.

9. Dispositif de contrôle destiné à effectuer un contrôle de plausibilité permettant d'identifier une perte de force de traction dans au moins une jambe de suspension d'un système de suspension d'un train de roulement pendant son fonctionnement, qui est conçu pour effectuer des comparaisons de valeurs nominales et effectives entre des déplacements élastiques mesurés (100, 102, 104, 106) et des grandeurs de jugement (108, 110, 112, 114, 118, 120, 122, 124, 126, 128) calculées à partir des déplacements élastiques (100, 102, 104, 106) avec des valeurs de seuil critiques prédéfinies (200), dans lequel les grandeurs de jugement calculées à partir des déplacements élastiques comprennent :
- une somme des déplacements élastiques (108),
- une valeur moyenne des déplacements élastiques (110),
- un angle de roulis d'un essieu avant (112) du train de roulement,
- un angle de roulis d'un essieu arrière (114) du train de roulement,
- une valeur moyenne de ces angles de roulis (116),
- un angle de tangage du côté droit (118) du train de roulement,
- un angle de tangage du côté gauche (120) du train de roulement,
- une valeur moyenne de ces angles de tangage (122),
- un angle de rotation du train de roulement de véhicule autour d'un axe diagonal (124) formé par une roue avant gauche et une roue arrière droite du train de roulement,
- un angle de rotation du train de roulement de véhicule autour d'un axe diagonal (126) formé par une roue avant droite et une roue arrière gauche du train de roulement, ou
- une valeur moyenne des angles de rotation autour des axes diagonaux (128),
et dans lequel, dans le cas où les valeurs de seuil critiques prédéfinies (200) sont dépassées en sens croissant ou décroissant, un signal de reconnaissance (212) est validé pour l'existence possible de la perte de force de traction.
